(19) Europäisches Patentamt
European Patent Office
Office européen des brevets

(11) **EP 3 070 589 B1**

(12) **EUROPEAN PATENT SPECIFICATION**

(45) Date of publication and mention
of the grant of the patent:
**18.03.2020 Bulletin 2020/12**

(21) Application number: **14874799.1**

(22) Date of filing: **18.04.2014**

(51) Int Cl.:
*G06F 3/0488* (2013.01)        *G06F 3/0484* (2013.01)
*G06F 3/0486* (2013.01)        *G06F 3/0354* (2013.01)
*H04N 5/232* (2006.01)

(86) International application number:
**PCT/CN2014/075690**

(87) International publication number:
**WO 2015/096311 (02.07.2015 Gazette 2015/26)**

(54) **METHOD AND DEVICE FOR RESIZING SELECTED REGION OF PREVIEWING INTERFACE**

VERFAHREN UND VORRICHTUNG ZUR VERGRÖSSERUNG EINER AUSGEWÄHLTEN REGION ZUR VORANSICHT EINER SCHNITTSTELLE

PROCÉDÉ ET DISPOSITIF DE REDIMENSIONNEMENT D'UNE RÉGION SÉLECTIONNÉE D'UNE INTERFACE DE PRÉVISUALISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2013 CN 201310719988**

(43) Date of publication of application:
**21.09.2016 Bulletin 2016/38**

(73) Proprietor: **ZTE Corporation
Shenzhen, Guangdong 518057 (CN)**

(72) Inventor: **PAN, Mingdong
Shenzhen
Guangdong 518057 (CN)**

(74) Representative: **CMS Cameron McKenna Nabarro
Olswang LLP
Cannon Place
78 Cannon Street
London EC4N 6AF (GB)**

(56) References cited:
EP-A2- 2 207 342        CN-A- 101 605 207
CN-A- 101 605 207       CN-A- 102 281 399
CN-A- 103 210 367       CN-A- 103 595 919
US-A1- 2014 043 255

• Anonymous: "Turn zooming on or off or magnify by factor - MATLAB zoom", , 14 October 2013 (2013-10-14), XP055505040, Retrieved from the Internet:
URL:https://web.archive.org/web/2013101409
5118/https://www.mathworks.com/help/matlab
/ref/zoom.html [retrieved on 2018-09-06]
• Anonymous: "Double-Click Zoom out feature", , 31 January 2011 (2011-01-31), XP055505041, Retrieved from the Internet:
URL:https://www.qtcentre.org/threads/38293
-Double-Click-Zoom-out-feature [retrieved on 2018-09-06]

## Description

Technical Field

The present invention relates to the field of terminal shooting, and in particular, to a method and apparatus for amplifying a selected region of a preview interface.

Background of the Related Art

Currently, mobile phones basically have a photographing and shooting function, which is one of commonly-used functions for people. During photographing and shooting, a preview interface will be presented on a screen of a mobile phone. There is a function of amplifying preview content in a currently-used menu of the mobile phone. During preview for photographing, a button corresponding to the amplification function may be dragged to amplify the preview content. Further, there is a function of selecting a rectangular frame for amplification and display on the preview interface. However, the above manners have some defects more or less. For example, a function key may shield the preview content to some extent; only a center of the preview region can be amplified; and if a rectangular region is selected, content to be amplified in the region is fixed and a size of the region required to be amplified cannot be changed, and if the size of the selected rectangular region is not suitable, the rectangular region needs to be re-selected, which is not convenient to operate.

CN 101 605 207 A discloses a method of operating a digital camera, wherein the digital camera is provided with a touch control screen. The method includes the step of starting a preview mode so as to enable the touch control screen to display a shot picture of the digital camera, choosing a close-up region for the shoot picture on the touch control screen and enabling the touch control screen to display the amplified close-up picture in the close-up region.

CN 102 855 063 A, corresponding in content to US 2014/043255 A1, discloses a page zooming method for an electronic device having a touch screen.

Summary of the Invention

In order to solve the above technical problems, the present invention discloses a method according to claim 1 and apparatus according to claim 4 for resizing a selected region of a preview interface. No separate resizing button is needed, which enables the preview interface to be neater, and an enlargement/reduction function of the selected region is added, which enables the user to adjust a size of the selected region according to the actually enlarged display content, thereby it is easy for the user to accurately select the content required to be resized on the preview interface. Further improvements and embodiments are provided in the dependent claims.

The positive progress effects of the embodiments of the present invention are as follows. In the embodiments of the present invention, a designated region of a user on a touch screen can be resized without a separate resizing icon. After an enlargement, the user can randomly change a size of a region by directly dragging an edge of a display frame, or enlarge or reduce the region according to a certain proportion by clicking within the display frame, thereby facilitating the operation of the user and improving the user experience.

Brief Description of Drawings

Fig. 1 is a flowchart of a method for amplifying a selected region according to embodiment one related to the present invention;
Fig. 2 is a flowchart of a method for amplifying a selected region according to embodiment two related to the present invention;
Fig. 3 is a flowchart of a method for enlarging or reducing the amplified selected region according to embodiment three related to the present invention;
Fig. 4 is a flowchart of a method for enlarging or reducing the amplified selected region according to embodiment four related to the present invention;
Fig. 5 is a flowchart of a method for enlarging or reducing the amplified selected region according to embodiment five related to the present invention;
Fig. 6 is a block diagram of an apparatus for amplifying a selected region according to embodiment six related to the present invention;
Fig. 7 is a block diagram of an apparatus for amplifying a selected region according to embodiment seven related to the present invention;
Fig. 8 is a diagram of an original preview interface according to embodiment one related to the present invention;
Fig. 9 is a diagram of a designated region on the preview interface in Fig. 8 according to embodiment one related to the present invention;
Fig. 10 is a diagram of amplifying and displaying display content of the designated region in Fig. 9 according to embodiment one related to the present invention;
Fig. 11 is a diagram of enlarging display content of the designated region in Fig. 10 according to embodiment three related to the present invention;
Fig. 12 is a diagram of a process of enlarging display content of the designated region in Fig. 10 according to embodiment four related to the present invention;
Fig. 13 is a diagram of enlarging and then displaying display content of the designated region in Fig. 10 according to embodiment four related to the present invention;
Fig. 14 is a diagram of a process of enlarging display content of the designated region in Fig. 10 in accordance with a preset coefficient according to embodiment five related to the present invention; and Fig. 15 is a diagram of enlarging and then displaying display content of the designated region in Fig. 10 in accordance with a preset coefficient according to embodiment five related to the present invention.

Embodiments related to the Invention

Some examples related to the present invention will be described in detail below in conjunction with accompanying drawings. It should be illustrated that the references made here to an "embodiment", "example", "aspect" or "configuration" may point to alterative aspects related to the invention but do not necessarily correspond to real realisations of it. The actual embodiments of the invention fall within the scope of the appended claims.

Method embodiments

Embodiment one

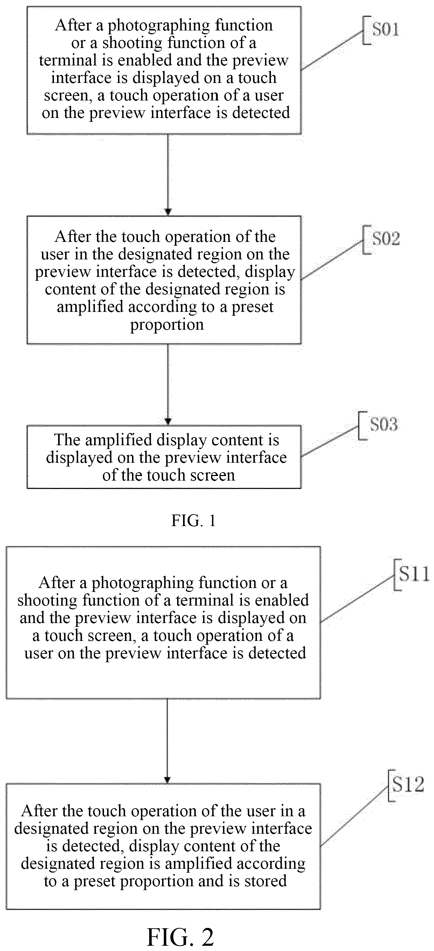

In this example, a method for amplifying a selected region of a preview interface is disclosed. As shown in Fig. 1, the method comprises the following steps.

In S01, after a photographing function or a shooting function of a terminal is enabled and the preview interface is displayed on a touch screen, a touch operation of a user on the preview interface is detected.

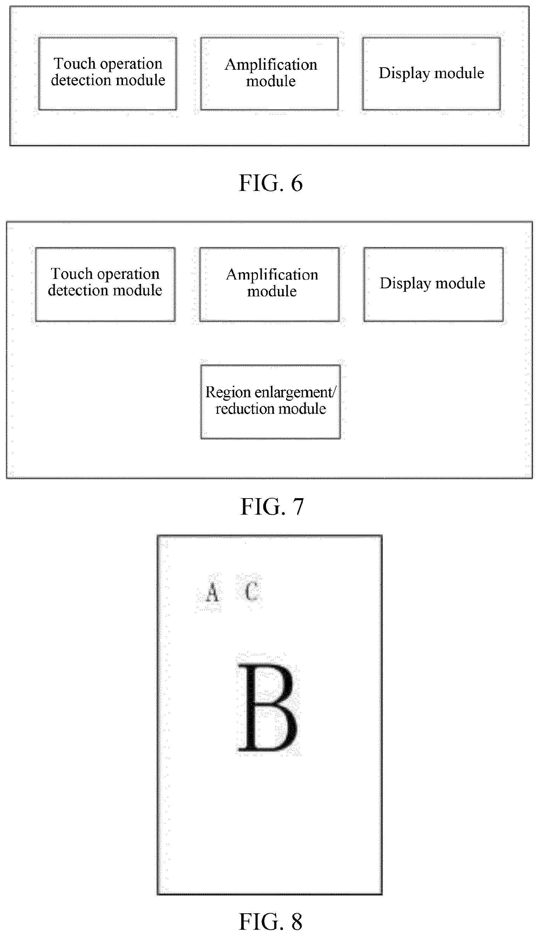

In a specific operation, a photographing or shooting function of a terminal is firstly enabled. Thereafter, a preview interface will be displayed on a touch screen of the terminal, as shown in Fig. 8. A user may implement an operation of designating a region on the touch screen. The present embodiment discloses a method for amplifying a selected region of a preview interface, i.e., detecting a press-down operation and a lift-up operation of the user on the touch screen, and recording coordinates of the press-down operation and the lift-up operation on the touch screen. By taking a left upper corner of the touch screen as a zero point of coordinates, and when the coordinates of the press-down operation on the touch screen are different from the coordinates of the lift-up operation on the touch screen, a rectangular region is formed with a line connecting the coordinates of the two points as a diagonal line. The rectangular region has a length of |X1-X0|, and a width of |Y1-Y0|, wherein (X1, Y1) are the coordinates of the lift-up operation, and (X0, Y0) are the coordinates of the press-down operation (in all embodiments, the left upper corner of the screen is used as the origin of coordinates and is enlarged to the X axis and the Y axis).

Further, when the coordinates of the press-down operation on the touch screen are different from the coordinates of the lift-up operation on the touch screen, the coordinates of the press-down operation may also be used as a center of a circle, and a circular region is formed with a line connecting the coordinates of the two points as a radius. The circle has a radius of

$$r=\sqrt{(X2-X3)^2+(Y2-Y3)^2}$$, wherein (X2, Y2) are the coordinates of the press-down operation, and (X3, Y3) are the coordinates of the lift-up operation.

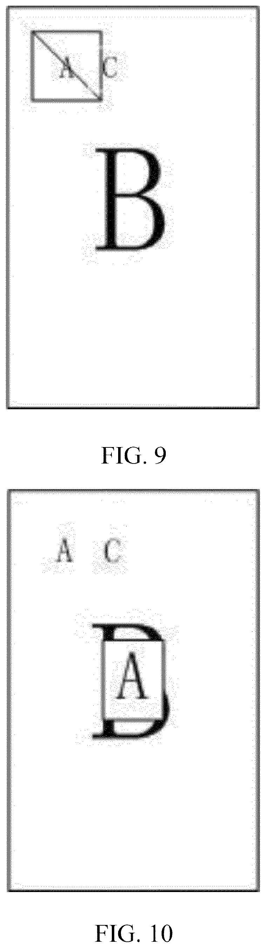

When a user needs to designate a region, the user only needs to implement an operation of drawing a line on the touch screen to form a rectangular or circular region, as shown in Fig. 9, which is convenient to operate. Of course, a graph which is drawn in such way is not limited to the rectangle or circle, and instead, the graph may also be in another shape. Similarly, the designated region may also be determined by using other operations except the operation of drawing a line.

In S02, after the touch operation of the user in the designated region on the preview interface is detected, display content of the designated region is amplified according to a preset proportion.

The content of the determined designated region is amplified according to a coefficient preset by the user in setting options or according to a preset coefficient when leaving factory, for example, 2 or 4. If the designated region is a rectangle, a focusing operation is performed with a central point of the rectangle as a focus, for example, a horizontal coordinate of the center of the rectangular region in S01 is (X1-X0)/2, and a longitudinal coordinate of the center is (Y1-Y0)/2. If the designated region is a circle, a focusing operation is performed with a center of the circle as a focus, for example, coordinates of the center of the circle in S01 is (X1, Y1).

In S03, the amplified display content is displayed on the preview interface of the touch screen.

The content of the amplified and focused designated region is displayed on an upper layer of the preview interface, as shown in Fig. 10. For example, the amplification coefficient is 2 at this time (the amplification coefficient is 2 in the following embodiments). The amplified display region is a region enclosed by (x, y), wherein, X4 ≤ x ≤ X5 and Y4 ≤ y ≤ Y5. A distance between X4 and X5 is 2*X1-X0), and a distance between Y4 and Y5 is 2*(Y1-Y0).

After the designated region is amplified and displayed on the upper layer of the preview interface, if the user wants to return back to the original preview interface, the user may touch a region outside the amplified and displayed designated region. That is, after the terminal detects a further press-down operation and a further lift-up operation of the user on the touch screen, the terminal judges whether the coordinates of the lift-up operation and the press-down operation are outside the amplified and displayed designated region, and if so, recovers the preview interface on the touch screen to the original interface. Of course, other ways for triggering recovery to the original interface may also be set.

The embodiment will be further described below by way of example with reference to Figs. 8, 9 and 10. Fig. 8 is an original preview interface having A and B thereon. At this time, if a user wants to amplify A on the left upper corner of the screen, a region where A is located may be designated (as shown in Fig. 9). According to presetting of the user or factory setting, assuming that the amplification coefficient is 2, display content in the region where A is located is amplified by 2. Fig. 10 is a diagram of amplifying and then displaying the content in the region where A is located.

Embodiment two

The present embodiment discloses a method for amplifying a selected region of a preview interface. As shown in Fig. 2, the method comprises the following steps.

In S11, after a photographing function or a shooting function of a terminal is enabled and the preview interface is displayed on a touch screen, a touch operation of a user on the preview interface is detected.

In S12, after the touch operation of the user in a designated region on the preview interface is detected, display content of the designated region is amplified according to a preset proportion and is stored.

The present embodiment differs from embodiment one primarily in that in the present embodiment, after the content of the designated region is amplified, the content is directly imaged and stored, i.e., amplifying and photographing the designated region of the user and then returning to the preview interface to wait for other operations.

Embodiment three

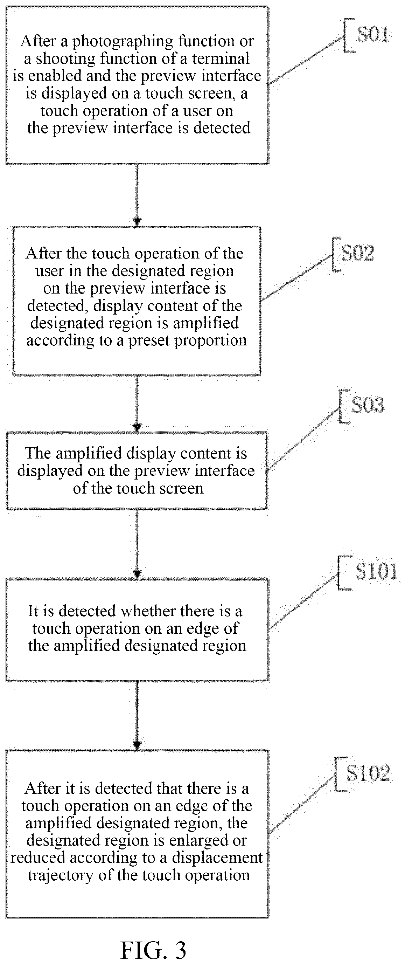

The present embodiment discloses a method for amplifying a selected region of a preview interface, which is implemented on the basis of the above embodiment one, i.e., reducing or enlarging the designated region in embodiment one. As shown in Fig. 3, the method comprises the following steps.

In S101, it is detected whether there is a touch operation on an edge of the amplified designated region.

An operation of the user on the edge of the amplified region is preferably as follows.

Firstly, after a press-down operation and a lift-up operation of the user on the touch screen are detected, coordinates of the press-down operation and the lift-up operation on the touch screen are recorded, and it is judged whether the coordinates are on an edge of the amplified region. For example, the coordinates of the press-down operation are (X6, Y6) and the coordinates of the lift-up operation are (X7, Y7). In S01, if the designated region is a rectangle, the content in the amplified and focused designated region will be displayed on an upper layer, and the displayed region is a region enclosed by (x, y), wherein $X4 \leq x \leq X5$ and $Y4 \leq y \leq Y5$. A distance between X4 and X5 is $2*(X1-X0)$, and a distance between Y4 and Y5 is $2*(Y1-Y0)$. At this time, it needs to judge whether (X6, Y6) is on (x, y) and does not coincide with (X4, Y4), (X4, Y5), (X5, Y4) and (X5, Y5). If the requirements are met, it is determined that there is a touch operation on the edge of the amplified designated region.

In S102, after it is detected that there is a touch operation on an edge of the amplified designated region, the designated region is enlarged or reduced according to a displacement trajectory of the touch operation.

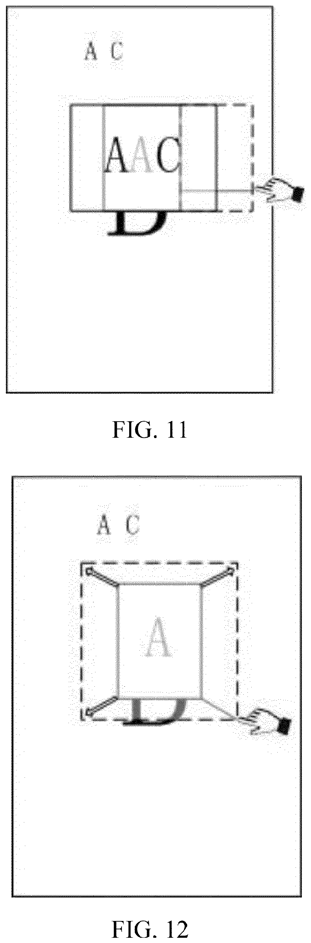

In an actual operation, as shown in Fig. 11, according to the recorded press-down operation (X6, Y6) and lift-up operation (X7, Y7), when a horizontal coordinate of the lift-up operation is greater than a horizontal coordinate of the press-down operation or a longitudinal coordinate of the lift-up operation is less than a longitudinal coordinate of the press-down operation, the operation is an enlargement operation, and a length of the designated region is enlarged by a distance of $(X7-X6)/2$, and a width of the designated region is enlarged by a distance of $(Y6-Y7)/2$. When the horizontal coordinate of the lift-up operation is less than the horizontal coordinate of the press-down operation or the longitudinal coordinate of the lift-up operation is greater than the longitudinal coordinate of the press-down operation, the operation is a reduction operation, and the length of the designated region is reduced by a distance of $(X6-X7)/2$, and the width of the designated region is reduced by a distance of $(Y7-Y6)/2$. However, the reduction operation has a precondition that the horizontal coordinate X6 of the lift-up operation must be greater than a horizontal coordinate X4 of the left upper corner of the amplified display region, and the longitudinal coordinate Y6 of the lift-up operation must be less than a longitudinal coordinate Y4 of the left upper corner of the amplified display region. Therefore, if the operation is the enlargement operation, the coordinates of the edge of the designated region are changed to (x1, y1), wherein $X0 \leq x1 \leq X1 + |(X7-X6)/2|$ and $Y0 \leq y1 \leq Y1+|(Y7-Y6)/2|$, and if the operation is the reduction operation, the coordinates of the edge of the designated region are changed to (x1, y1), wherein $X0 \leq x1 \leq X1- |(X7 - X6)/2|$ and $Y0 \leq y1 \leq Y1-|(Y7 - Y6)/2|$. Finally, the designated region is amplified and displayed in accordance with the preset amplification coefficient according to the size of the designated region at this time.

Embodiment four

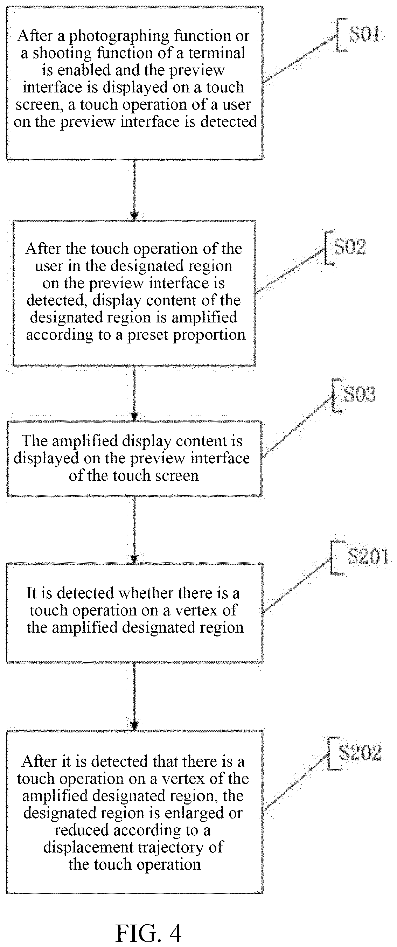

The present embodiment discloses a method for amplifying a selected region of a preview interface, which is implemented on the basis of the above embodiment one and belongs to a special case of embodiment three. Embodiment four has the same effects as those of embodiment three, but has different implementations from those of embodiment three. The method is merely suitable for a condition where the designated region is a rectangle. As shown in Fig. 4, the method comprises the following steps.

In S201, it is detected whether there is a touch operation on a vertex of the amplified designated region.

An operation of the user on the vertex of the amplified region is preferably as follows.

Firstly, after a press-down operation and a lift-up operation of the user on the touch screen are detected, coordinates of the press-down operation and the lift-up operation on the touch screen are recorded, and it is judged whether the coordinates are on a vertex of the amplified region. For example, the coordinates of the press-down operation are (X6, Y6) and the coordinates of the lift-up operation are (X7, Y7). In S01, if the designated region is a rectangle, the content in the amplified and focused designated region will be displayed on an upper layer, and the displayed region is a region enclosed by (x, y), wherein X4 ≤ x ≤ X5 and Y4 ≤ y ≤ Y5. The vertexes of the amplified region are (X4, Y4), (X4, Y5), (X5, Y4) and (X5, Y5). At this time, it needs to judge whether (X6, Y6) coincides with any point of (X4, Y4), (X4, Y5), (X5, Y4) and (X5, Y5). If the requirements are met, it is determined that there is a touch operation on the vertex of the amplified designated region, as shown in Fig. 12.

In S202, after it is detected that there is a touch operation on a vertex of the amplified designated region, the designated region is enlarged or reduced according to a displacement trajectory of the touch operation.

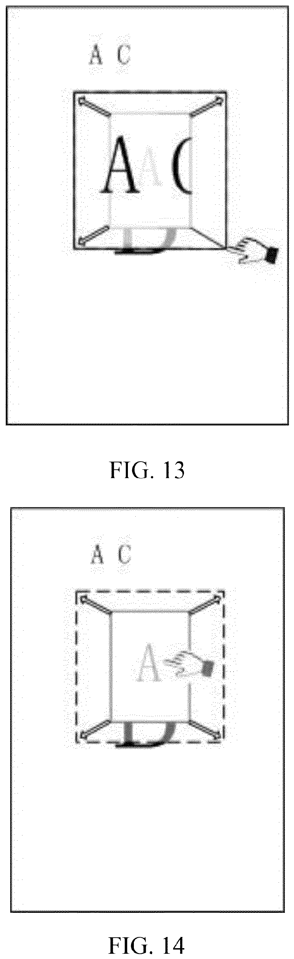

In an actual operation, according to the recorded press-down operation (X6, Y6) and lift-up operation (X7, Y7), when a horizontal coordinate of the lift-up operation is greater than a horizontal coordinate of the press-down operation or a longitudinal coordinate of the lift-up operation is less than a longitudinal coordinate of the press-down operation, the operation is an enlargement operation. When the horizontal coordinate of the lift-up operation is less than the horizontal coordinate of the press-down operation or the longitudinal coordinate of the lift-up operation is greater than the longitudinal coordinate of the press-down operation, the operation is a reduction operation. However, the reduction operation has a precondition that the horizontal coordinate X6 of the lift-up operation must be greater than a horizontal coordinate X4 of the left upper corner of the amplified display region, and the longitudinal coordinate Y6 of the lift-up operation must be less than a longitudinal coordinate Y4 of the left upper corner of the amplified display region. At this time, the edges of the designated region are amplified simultaneously. If the operation is the enlargement operation, the coordinates of the edge of the designated region are changed to (x2, y2), wherein X0-|(X7-X6)/2| ≤ x2 ≤ X1+|(X7-X6)/2| and Y0-|(Y7-Y6)/2| ≤ y2 ≤ Y1+|(Y7-Y6)/2|; and if the operation is the reduction operation, the coordinates of the edges of the designated region are changed to (x2, y2), wherein X0+|(X7-X6)/2| ≤ x2 ≤ X1-|(X7-X6)/2| and Y0+|(Y7-Y6)/2| ≤ y2 ≤ Y1-|(Y7-Y6)/2|. Finally, the designated region is amplified and displayed in accordance with the preset amplification coefficient according to the size of the designated region at this time, as shown in Fig. 13.

Embodiment five

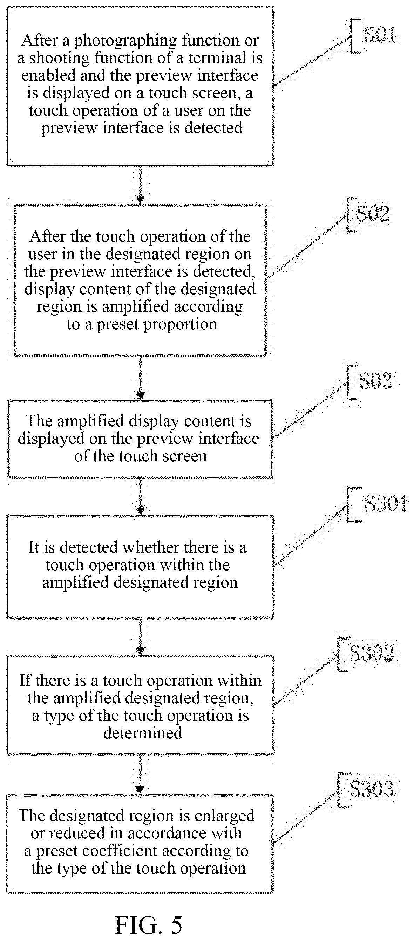

The present embodiment discloses a method for amplifying a selected region of a preview interface, which provides a method having the same effects as those of embodiments three and four but having different operation manners from those of embodiments three and four on the basis of the above embodiments three and four. The present embodiment differs from embodiment three primarily in that in the present embodiment, a movement operation on the edge or vertex of the amplified designated region is modified to a touch operation within the amplified designated region. As shown in Fig. 5, the method comprises the following steps.

In S301, it is detected whether there is a touch operation within the amplified designated region.

A touch operation of the user within the amplified designated region preferably comprises the following steps.

After a press-down operation and a lift-up operation of the user on the touch screen are detected, coordinates of the press-down operation and the lift-up operation on the touch screen are recorded, and it is judged whether the coordinates of the press-down operation and the lift-up operation are within the amplified designated region. For example, the press-down operation and the lift-up operation of the user on the touch screen are detected, and the coordinates (X8, Y8) of the press-down operation and the coordinates (X9, Y9) of the lift-up operation are recorded. In S01, if the designated region is a rectangle, the content in the amplified and focused designated region will be displayed on an upper layer, and the displayed region is a region enclosed by (x, y), wherein X4 ≤ x ≤ X5 and Y4 ≤ y ≤ Y5. It is judged whether the coordinates (X8, Y8) of the press-down operation and the coordinates (X9, Y9) of the lift-up operation are within the region enclosed by (x, y), as shown in Fig. 14.

In S302, if there is a touch operation within the amplified designated region, a type of the touch operation is determined.

In an actual operation, if the coordinates of the press-down operation are within the amplified designated region, the number of times of the press-down operation within the amplified designated region for a preset period of time is calculated, and the numbers of times of the press-down operation within the amplified designated region for the preset period of time (for example, 2s) are accumulated.

In S303, the designated region is enlarged or reduced in accordance with a preset coefficient according to the type of the touch operation.

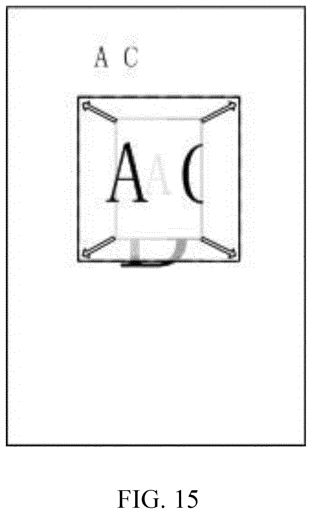

The type of the touch operation is determined according to the number of times of the press-down operation. If the recorded number of times of the press-down operation is 2, it is determined that the touch operation is an enlargement operation at this time; and if the recorded number of times of the press-down operation is 3, it is determined that the touch operation is a reduction operation at this time. The designated region is enlarged or reduced in accordance with a preset proportion according to the type of the touch operation. Wherein, the size of the designated region is adjusted according to the enlargement operation or reduction operation determined in the previous step in accordance with a preset enlargement or reduction coefficient (for example, the enlargement or reduction coefficient is 3 or 6). The effect diagram of the actual operation is shown in Fig. 15.

Apparatus embodiments

Embodiment six

The present embodiment discloses an apparatus for amplifying a selected region of a preview interface, as shown in Fig. 6, comprising:

a touch operation detection module configured to detect a touch operation of a user on the preview interface after a photographing function or a shooting function of a terminal is enabled and the preview interface is displayed on a touch screen;

an amplification module configured to amplify display content of a designated region on the preview interface according to a preset proportion after the touch operation of the user in the designated region is detected by the touch operation detection module; and

a display module configured to display the display content amplified by the amplification module on the touch screen.

Embodiment seven

The present embodiment discloses an apparatus for amplifying a selected region of a preview interface, as shown in Fig. 7, comprising:

a touch operation detection module configured to detect a touch operation of a user on the preview interface after a photographing function or a shooting function of a terminal is enabled and the preview interface is displayed on a touch screen;

an amplification module configured to amplify display content of a designated region on the preview interface according to a preset proportion after the touch operation of the user in the designated region is detected by the touch operation detection module;

a display module configured to display the display content amplified by the amplification module on the touch screen; and

a region enlargement/reduction module configured to enlarge or reduce the designated region according to a displacement trajectory of a touch operation when there is the touch operation on an edge of the amplified designated region.

Further, the apparatus may comprise an original interface recovery module configured to close the display content of the amplified designated region and recover the preview interface on the touch screen to the original interface when there is a touch operation outside the amplified designated region.
An operation of the user on the edge of the amplified region is preferably as follows.
After a press-down operation and a lift-up operation of the user on the touch screen are detected, coordinates of the press-down operation and the lift-up operation on the touch screen are recorded, and it is judged whether the coordinates are on an edge of the designated region. For example, in S101, the coordinates of the press-down operation are (X6, Y6) and the coordinates of the lift-up operation are (X7, Y7). In S01, if the designated region is a rectangle, the content in the amplified and focused designated region will be displayed on an upper layer, and the displayed region is a region enclosed by (x, y), wherein $X4 \leq x \leq X5$ and $Y4 \leq y \leq Y5$. A distance between X4 and X5 is 2*(X1-X0), and a distance between Y4 and Y5 is 2*(Y1-Y0). At this time, it needs to judge whether (X6, Y6) is on (x, y) and does not coincide with (X4, Y4), (X4, Y5), (X5, Y4) and (X5, Y5). If the requirements are met, it is determined that there is a touch operation on the edge of the amplified designated region.
An operation of the user on the vertex of the amplified region is preferably as follows.
After a press-down operation and a lift-up operation of the user on the touch screen are detected, coordinates of the press-down operation and the lift-up operation on the touch screen are recorded, and it is judged whether the coordinates are on a vertex of the amplified region. For example, in S101, the coordinates of the press-down operation are (X6, Y6) and the coordinates of the lift-up operation are (X7, Y7). In S01, if the designated region is a rectangle, the content in the amplified and focused designated region will be displayed on an upper layer, and the displayed region is a region enclosed by (x, y), wherein $X4 \leq x \leq X5$ and $Y4 \leq y \leq Y5$. The vertexes of the amplified region are (X4, Y4), (X4, Y5), (X5, Y4) and (X5, Y5). At this time, it needs to judge whether (X6, Y6) coincides with any point of (X4, Y4), (X4, Y5), (X5, Y4) and (X5, Y5). If the requirements are met, it is determined that there is a touch operation on the vertex of the amplified designated region.
A person having ordinary skill in the art can understand that all or part of steps in the above embodiments can be implemented by computer program flow, which can be stored in a computer readable storage medium, is performed on a corresponding hardware platform (for example, a system, a device, an apparatus, and a component etc.), and when performed, comprises one of steps of the method embodiment or a combination thereof.

Alternatively, all or part of steps in the above embodiments can also be implemented by integrated circuits, they can be respectively made into a plurality of integrated circuit modules; alternatively, and they are implemented with making several modules or steps of them into a single integrated circuit module. Thus, the present invention is not limited to any specific combinations of hardware and software.

Each module, functional module or functional unit in the aforementioned embodiments can be implemented with general computing apparatuses, and can be integrated in a single computing apparatus, or distributed onto a network consisting of a plurality of computing apparatuses.

When each module, functional module or functional unit in the aforementioned embodiments is implemented in a form of software functional modules and is sold or used as an independent product, it can be stored in a computer readable storage medium, which may be a read-only memory, a disk or a disc etc.

Changes or substitutions can easily be conceived by a person having ordinary skill in the art within the technical scope disclosed by the present invention, and should be included in the protection scope of the present invention. Therefore, the protection scope of the present invention is defined by the protection scope of the claims.

Industrial applicability

In the embodiments of the present invention, a designated region of a user on a touch screen can be amplified without a single amplification icon. After the amplification, the user can randomly change a size of a region required to be amplified by directly dragging an edge of a display frame, or enlarge or reduce the region required to be amplified according to a certain proportion by clicking within the display frame, without designating regions many times because an appropriate amplified region cannot be selected, thereby facilitating the operation of the user and improving the user experience.

**Claims**

1.  A method for resizing a selected region of a preview interface, applied to a touch screen terminal having a photographing function, comprising:

    after the photographing function of the terminal is enabled and the preview interface is displayed on a touch screen, detecting (S01) a first touch operation of a user for determining a designated region on the preview interface;
    after the first touch operation of the user for determining the designated region on the preview interface is detected, enlarging (S02) a display content of the designated region according to a preset proportion; and
    displaying (S03) the enlarged display content of the designated region on the touch screen as an enlarged designated region, **characterised in that**
    after displaying (S03) the enlarged display content of the designated region on the touch screen, the method further comprises:

    detecting (S101) whether there is a second touch operation on an edge of the enlarged designated region; and, if yes, further enlarging or reducing (S102) the designated region according to a displacement trajectory of the touch operation;
    detecting (S301) whether there is a third touch operation within the enlarged designated region comprising a number of press-down operations and lift-up operations for a pre-set period of time; if yes, determining (S302) a type of the third touch operation to be an enlarging operation or a reducing operation according to the number of press-down operations and consequently further enlarging or reducing (S303) the designated region by a pre-set coefficient according to the type of the third touch operation; and detecting whether there is a fourth touch operation outside the enlarged designated region, and, if yes, recovering the preview interface on the touch screen to the original interface.

2.  The method according to claim 1, wherein, after the first touch operation of the user for determining the designated region on the preview interface is detected, enlarging the display content of the designated region according to the preset proportion comprises:

    after the first touch operation of the user for determining the designated region on the preview interface is detected, focusing on a center of the designated region; and
    after the center of the designated region is focused, enlarging the display content.

3.  The method according to claim 1, wherein detecting whether there is the second touch operation on the edge of the enlarged designated region comprises:

after a press-down operation and a lift-up operation of the user on the touch screen are detected, recording coordinates of the press-down operation and the lift-up operation on the touch screen;

detecting whether the coordinates of the press-down operation are on the edge of the enlarged designated region; and

if the coordinates of the press-down operation are on the edge of the enlarged designated region, determining that the touch operation is on the edge of the enlarged designated region and determining the displacement trajectory.

4. An apparatus for resizing a selected region of a preview interface, comprising:

a touch operation detection module configured to detect a first touch operation of a user for determining a designated region on the preview interface after a photographing function of a terminal is enabled and the preview interface is displayed on a touch screen;

an amplification module configured to enlarge a display content of the designated region on the preview interface according to a preset proportion after the first touch operation of the user for determining the designated region is detected by the touch operation detection module; and

a display module configured to display the display content enlarged by the amplification module on the touch screen as an enlarged designated region, **characterised in that**

the apparatus further comprises a region enlargement/reduction module and an original interface recovery module,

wherein the region enlargement/reduction module is configured to, when there is a second touch operation on an edge of the enlarged designated region, further enlarge or reduce the designated region according to a displacement trajectory of the touch operation;

the touch operation detection module is further configured to detect, after the display module displays the enlarged content of the designated region on the touch screen, whether there is a third touch operation within the enlarged designated region comprising a number of press-down operations and lift-up operations for a pre-set period of time;

the enlargement/reduction module is further configured, if there is the third touch operation within the enlarged designated region comprising the number of press-down operations and lift-up operations for the pre-set period of time, to determine a type of the third touch operation to be an enlarging operation or a reducing operation according to the number of press-down operations and consequently to further enlarge or reduce the designated region in accordance with a pre-set coefficient according to the type of the third touch operation; and

the original interface recovery module is configured to recover the preview interface on the touch screen to the original interface when there is a fourth touch operation outside the enlarged designated region.

5. The apparatus according to claim 4, wherein the touch operation detection module is further configured to detect a further press-down operation and a further lift-up operation of the user on the touch screen, and record coordinates of the press-down operation and the lift-up operation on the touch screen.

**Patentansprüche**

1. Verfahren zum Ändern der Größe eines ausgewählten Bereichs einer Vorschau-Benutzeroberfläche, die auf ein Touchscreen-Endgerät mit einer Fotofunktion angewendet wird, umfassend:

nachdem die Fotofunktion des Endgeräts aktiviert ist und die Vorschau-Benutzeroberfläche auf einem Touchscreen angezeigt wird, Erfassen (S01) eines ersten Berührungsvorgangs eines Benutzers zum Bestimmen eines bestimmten Bereichs auf der Vorschau-Benutzeroberfläche;

nachdem der erste Berührungsvorgang des Benutzers zum Bestimmen des bestimmten Bereichs auf der Vorschau-Benutzeroberfläche erfasst wurde, Vergrößern (S02) eines Anzeigeinhalts des bestimmten Bereichs gemäß einem vorgegebenen Verhältnis; und

Anzeigen (S03) des vergrößerten Anzeigeinhalts des bestimmten Bereichs auf dem Touchscreen als vergrößerter bestimmter Bereich, **dadurch gekennzeichnet, dass**

das Verfahren nach dem Anzeigen (S03) des vergrößerten Anzeigeinhalts des bestimmten Bereichs auf dem Touchscreen weiterhin umfasst:

Erfassen (S101), ob es einen zweiten Berührungsvorgang an einer Kante des vergrößerten bezeichneten Bereichs gibt; und, wenn ja, weiteres Vergrößern oder Verkleinern (S102) des bezeichneten Bereichs gemäß einer Verschiebungstrajektorie des Berührungsvorgangs;

Erfassen (S301), ob es einen dritten Berührungsvorgang innerhalb des vergrößerten bezeichneten Bereichs gibt, der eine Anzahl von Druckvorgängen und Anhebevorgängen für einen voreingestellten Zeitraum umfasst; wenn ja, Bestimmen (S302), dass eine Art des dritten Berührungsvorgangs ein Vergrößerungsvorgang oder ein Verkleinerungsvorgang gemäß der Anzahl der Druckvorgänge ist, und folglich weiteres Vergrößern oder Verkleinern (S303) des bezeichneten Bereichs um einen voreingestellten Koeffizienten gemäß der Art des dritten Berührungsvorgangs; und Erfassen, ob es einen vierten Berührungsvorgang außerhalb des vergrößerten, bestimmten Bereichs gibt, und, wenn ja, Wiederherstellen der Vorschau-Benutzeroberfläche auf dem Touchscreen auf die ursprüngliche Benutzeroberfläche.

2. Verfahren nach Anspruch 1, wobei nach dem ersten Berührungsvorgang des Benutzers zum Bestimmen des bestimmten Bereichs auf der Vorschau-Benutzeroberfläche das Vergrößern des Anzeigeinhalts des bestimmten Bereichs gemäß dem voreingestellten Verhältnis umfasst:

nachdem der erste Berührungsvorgang des Benutzers zum Bestimmen des bestimmten Bereichs auf der Vorschau-Benutzeroberfläche erfasst wurde, wobei der Fokus auf einem Zentrum des bestimmten Bereichs liegt; und nachdem die Mitte des bestimmten Bereichs fokussiert wurde, vergrößern des Anzeigeinhalts.

3. Verfahren nach Anspruch 1, wobei das Erfassen, ob es den zweiten Berührungsvorgang am Rand des vergrößerten bezeichneten Bereichs gibt, umfasst:

nachdem ein Druckvorgang und ein Anhebevorgang des Benutzers auf dem Touchscreen erfasst werden, wobei Koordinaten des Druckvorgangs und des Anhebevorgangs auf dem Touchscreen aufgezeichnet werden; Erfassen, ob sich die Koordinaten des Druckvorgangs am Rand des vergrößerten bezeichneten Bereichs befinden; und wenn sich die Koordinaten des Druckvorgangs am Rand des vergrößerten bezeichneten Bereichs befinden, Bestimmen, dass sich der Berührungsvorgang am Rand des vergrößerten bestimmten Bereichs befindet, und Bestimmen der Verschiebungstrajektorie.

4. Vorrichtung zum Ändern der Größe eines ausgewählten Bereichs einer Vorschau-Benutzeroberfläche, umfassend:

ein Berührungsvorgangserfassungsmodul, das konfiguriert ist, um einen ersten Berührungsvorgang eines Benutzers zu erfassen, um einen bestimmten Bereich auf der Vorschau-Benutzeroberfläche zu bestimmen, nachdem eine Fotofunktion eines Endgeräts aktiviert ist und die Vorschau-Benutzeroberfläche auf einem Touchscreen angezeigt wird; ein Verstärkungsmodul, das konfiguriert ist, um einen Anzeigeinhalt des bestimmten Bereichs auf der Vorschau-Benutzeroberfläche gemäß einem voreingestellten Verhältnis zu vergrößern, nachdem der erste Berührungsvorgang des Benutzers zum Bestimmen des bestimmten Bereichs durch das Berührungsvorgangserfassungsmodul erfasst wurde; und ein Anzeigemodul, das konfiguriert ist, um den durch das Verstärkungsmodul vergrößerten Anzeigeinhalt auf dem Touchscreen als vergrößerten, bestimmten Bereich anzuzeigen, **dadurch gekennzeichnet, dass** die Vorrichtung weiterhin ein Bereichsvergrößerungs-/-verkleinerungsmodul und ein Ursprüngliche-Benutzeroberflächen-Wiederherstellungsmodul umfasst, wobei das Bereichsvergrößerungs-/-verkleinerungsmodul konfiguriert ist, um, wenn es einen zweiten Berührungsvorgang an einer Kante des vergrößerten bezeichneten Bereichs gibt, den bezeichneten Bereich gemäß einer Verschiebungstrajektorie des Berührungsvorgangs weiter zu vergrößern oder zu verkleinern; das Berührungsvorgangserfassungsmodul weiterhin konfiguriert ist, um zu erfassen, nachdem das Anzeigemodul den vergrößerten Inhalt des bestimmten Bereichs auf dem Touchscreen angezeigt hat, ob es einen dritten Berührungsvorgang innerhalb des vergrößerten bestimmten Bereichs gibt, der eine Reihe von Druckvorgängen und Anhebevorgängen für eine vorgegebene Zeitspanne umfasst; das Vergrößerungs-/Verkleinerungsmodul weiterhin konfiguriert ist, wenn es den dritten Berührungsvorgang innerhalb des vergrößerten bestimmten Bereichs gibt, der die Anzahl der Druckvorgängen und Anhebevorgängen für die vorgegebene Zeitspanne umfasst, eine Art des dritten Berührungsvorgangs als Vergrößerungsvorgang oder Verkleinerungsvorgang entsprechend der Anzahl der Druckvorgänge zu bestimmen und somit den bestimmten Bereich gemäß einem vorgegebenen Koeffizienten entsprechend der Art des dritten Vorgangs weiter zu vergrößern oder zu verkleinern; und das Ursprüngliche-Benutzeroberflächen-Wiederherstellungsmodul konfiguriert ist, um die Vorschau-Benutzeroberfläche auf dem Touchscreen zur ursprünglichen Benutzeroberfläche wiederherzustellen, wenn es einen vierten Berührungsvorgang außerhalb des vergrößerten, bestimmten Bereichs gibt.

**5.** Vorrichtung nach Anspruch 4, wobei das Berührungsvorgangserfassungsmodul weiterhin konfiguriert ist, um einen weiteren Druckvorgang und einen weiteren Anhebevorgang des Benutzers auf dem Touchscreen zu erfassen und Koordinaten des Druckvorgangs und des Anhebevorgangs auf dem Touchscreen aufzuzeichnen.

**Revendications**

**1.** Procédé de redimensionnement d'une région sélectionnée d'une interface de prévisualisation, appliqué à un terminal à écran tactile ayant une fonction de photographie, comprenant :

après que la fonction de photographie du terminal est activée et que l'interface de prévisualisation est affichée sur un écran tactile, la détection (S01) d'une première opération tactile d'un utilisateur pour déterminer une région désignée sur l'interface de prévisualisation ;
après que la première opération tactile de l'utilisateur pour déterminer la région désignée sur l'interface de prévisualisation est détectée, l'agrandissement (S02) d'un contenu d'affichage de la région désignée selon une proportion préréglée ; et
l'affichage (S03) du contenu d'affichage agrandi de la région désignée sur l'écran tactile en tant que région désignée agrandie, **caractérisé en ce que**
après l'affichage (S03) du contenu d'affichage agrandi de la région désignée sur l'écran tactile, le procédé comprend en outre :

le fait de détecter (S101) s'il y a une deuxième opération tactile sur un bord de la région désignée agrandie ; et, si oui, l'agrandissement ou la réduction supplémentaire (S102) de la région désignée selon une trajectoire de déplacement de l'opération tactile ;
le fait de détecter (S301) s'il y a une troisième opération tactile à l'intérieur de la région désignée agrandie comprenant un nombre d'opérations de pression et d'opérations de relèvement pendant une période de temps préréglée ; si oui, le fait de déterminer (S302) qu'un type de la troisième opération tactile est une opération d'agrandissement ou une opération de réduction selon le nombre d'opérations de pression et par conséquent l'agrandissement ou la réduction supplémentaire (S303) de la région désignée d'un coefficient préréglé selon le type de la troisième opération tactile ; et
le fait de détecter s'il y a une quatrième opération tactile à l'extérieur de la région désignée agrandie, et, si oui, le rétablissement de l'interface de prévisualisation sur l'écran tactile à l'interface originale.

**2.** Procédé selon la revendication 1, dans lequel, après que la première opération tactile de l'utilisateur pour déterminer la région désignée sur l'interface de prévisualisation est détectée, l'agrandissement du contenu d'affichage de la région désignée selon la proportion préréglée comprend :

après que la première opération tactile de l'utilisateur pour déterminer la région désignée sur l'interface de prévisualisation est détectée, la fixation sur un centre de la région désignée ; et après que le centre de la région désignée est fixé, l'agrandissement du contenu d'affichage.

**3.** Procédé selon la revendication 1, dans lequel le fait de détecter s'il y a la deuxième opération tactile sur le bord de la région désignée agrandie comprend :

après qu'une opération de pression et une opération de relèvement de l'utilisateur sur l'écran tactile sont détectées, l'enregistrement de coordonnées de l'opération de pression et de l'opération de relèvement sur l'écran tactile ;
le fait de détecter si les coordonnées de l'opération de pression sont sur le bord de la région désignée agrandie ; et
si les coordonnées de l'opération de pression sont sur le bord de la région désignée agrandie, le fait de déterminer que l'opération tactile est sur le bord de la région désignée agrandie et la détermination de la trajectoire de déplacement.

**4.** Appareil de redimensionnement d'une région sélectionnée d'une interface de prévisualisation, comprenant :

un module de détection d'opération tactile configuré pour détecter une première opération tactile d'un utilisateur pour déterminer une région désignée sur l'interface de prévisualisation après qu'une fonction de photographie d'un terminal est activée et que l'interface de prévisualisation est affichée sur un écran tactile ;
un module d'amplification configuré pour agrandir un contenu d'affichage de la région désignée sur l'interface de prévisualisation selon une proportion préréglée après que la première opération tactile de l'utilisateur pour déterminer la région désignée est détectée par le module de détection d'opération tactile ; et
un module d'affichage configuré pour afficher le contenu d'affichage agrandi par le module d'amplification sur l'écran tactile en tant que région désignée agrandie, **caractérisé en ce que**

l'appareil comprend en outre un module d'agrandissement/réduction de région et un module de rétablissement d'interface originale,

dans lequel le module d'agrandissement/réduction de région est configuré pour, lorsqu'il y a une deuxième opération tactile sur un bord de la région désignée agrandie, agrandir ou réduire davantage la région désignée selon une trajectoire de déplacement de l'opération tactile ;

le module de détection d'opération tactile est en outre configuré pour détecter, après que le module d'affichage affiche le contenu agrandi de la région désignée sur l'écran tactile, s'il y a une troisième opération tactile à l'intérieur de la région désignée agrandie comprenant un nombre d'opérations de pression et d'opérations de relèvement pendant une période de temps préréglée ;

le module d'agrandissement/réduction est en outre configuré, s'il y a la troisième opération tactile à l'intérieur de la région désignée agrandie comprenant le nombre d'opérations de pression et d'opérations de relèvement pendant la période de temps préréglée, pour déterminer qu'un type de la troisième opération tactile est une opération d'agrandissement ou une opération de réduction selon le nombre d'opérations de pression et par conséquent pour agrandir ou réduire davantage la région désignée selon un coefficient préréglé selon le type de la troisième opération tactile ; et

le module de rétablissement d'interface originale est configuré pour rétablir l'interface de prévisualisation sur l'écran tactile à l'interface originale lorsqu'il y a une quatrième opération tactile à l'extérieur de la région désignée agrandie.

5. Appareil selon la revendication 4, dans lequel le module de détection d'opération tactile est en outre configuré pour détecter une autre opération de pression et une autre opération de relèvement de l'utilisateur sur l'écran tactile, et enregistrer des coordonnées de l'opération de pression et de l'opération de relèvement sur l'écran tactile.

After a photographing function or a shooting function of a terminal is enabled and the preview interface is displayed on a touch screen, a touch operation of a user on the preview interface is detected

S01

After the touch operation of the user in the designated region on the preview interface is detected, display content of the designated region is amplified according to a preset proportion

S02

The amplified display content is displayed on the preview interface of the touch screen

S03

FIG. 1

After a photographing function or a shooting function of a terminal is enabled and the preview interface is displayed on a touch screen, a touch operation of a user on the preview interface is detected

S11

After the touch operation of the user in a designated region on the preview interface is detected, display content of the designated region is amplified according to a preset proportion and is stored

S12

FIG. 2

After a photographing function or a shooting function of a terminal is enabled and the preview interface is displayed on a touch screen, a touch operation of a user on the preview interface is detected — S01

After the touch operation of the user in the designated region on the preview interface is detected, display content of the designated region is amplified according to a preset proportion — S02

The amplified display content is displayed on the preview interface of the touch screen — S03

It is detected whether there is a touch operation on an edge of the amplified designated region — S101

After it is detected that there is a touch operation on an edge of the amplified designated region, the designated region is enlarged or reduced according to a displacement trajectory of the touch operation — S102

FIG. 3

After a photographing function or a shooting function of a terminal is enabled and the preview interface is displayed on a touch screen, a touch operation of a user on the preview interface is detected
S01

After the touch operation of the user in the designated region on the preview interface is detected, display content of the designated region is amplified according to a preset proportion
S02

The amplified display content is displayed on the preview interface of the touch screen
S03

It is detected whether there is a touch operation on a vertex of the amplified designated region
S201

After it is detected that there is a touch operation on a vertex of the amplified designated region, the designated region is enlarged or reduced according to a displacement trajectory of the touch operation
S202

FIG. 4

After a photographing function or a shooting function of a terminal is enabled and the preview interface is displayed on a touch screen, a touch operation of a user on the preview interface is detected — S01

After the touch operation of the user in the designated region on the preview interface is detected, display content of the designated region is amplified according to a preset proportion — S02

The amplified display content is displayed on the preview interface of the touch screen — S03

It is detected whether there is a touch operation within the amplified designated region — S301

If there is a touch operation within the amplified designated region, a type of the touch operation is determined — S302

The designated region is enlarged or reduced in accordance with a preset coefficient according to the type of the touch operation — S303

FIG. 5

| Touch operation detection module | Amplification module | Display module |

**FIG. 6**

| Touch operation detection module | Amplification module | Display module |

| Region enlargement/ reduction module |

**FIG. 7**

A  C

B

**FIG. 8**

FIG. 9

FIG. 10

FIG. 11

FIG. 12

FIG. 13

FIG. 14

FIG. 15

## REFERENCES CITED IN THE DESCRIPTION

### Patent documents cited in the description

- CN 101605207 A
- CN 102855063 A
- US 2014043255 A1